# EUROPEAN PATENT SPECIFICATION

(11) **EP 2 607 065 B1**
(45) Date of publication and mention of the grant of the patent: **27.04.2016**
(21) Application number: 12196688.1
(22) Date of filing: 12.12.2012
(51) Int. Cl.: B29D 30/60, B60C 11/00

(54) **Pneumatic tire and manufacturing method of the same**
Luftreifen und Herstellungsverfahren dafür
Pneumatique et son procédé de fabrication

(30) Priority: 19.12.2011 JP 2011277608; 12.09.2012 JP 2012200587
(43) Date of publication of application: 26.06.2013
(73) Proprietor: Toyo Tire & Rubber Co. Ltd., Osaka-shi, Osaka 550-8661 (JP)
(72) Inventor: Inoue, Yuji, Osaka-shi, Osaka 550-8661 (JP)
(74) Representative: Sajda, Wolf E.

(56) References cited:
- EP-A1- 1 803 544
- EP-A2- 1 020 284
- EP-A2- 1 629 964
- DE-A1- 3 916 271
- DE-A1-102008 013 769
- JP-A- 2006 062 196
- US-B1- 6 510 881

## Description

### BACKGROUND OF THE INVENTION

### Field of the Invention

The present invention relates to a pneumatic tire having a tread rubber, and a manufacturing method of the same.

### Description of the Related Art

Conventionally, there has been proposed a so-called ribbon winding construction method which forms a tread rubber by spirally winding an unvulcanized ribbon rubber around a tire rotating axis to an outer peripheral surface of an approximately cylindrical rotation support body, while overlapping a side edge thereof.

As one example of a pneumatic tire in which the tread rubber is formed by the ribbon winding construction method, for example, JP-A-2006-130 880 discloses a pneumatic tire structured such that a ribbon rubber is wound from a starting point which is positioned in a center portion of a tread toward one side in a tire width direction in a tire meridian cross section, is next folded back to the other side in the tire width direction in a tread end on the one side, and is wound toward a tread end on the other side beyond the starting point, and a winding start end and a winding terminal end of the ribbon rubber are arranged in a center portion of the tread rubber (in the vicinity of a tire equator).

As another example of the pneumatic tire which is manufactured by the ribbon winding construction method, JP-A-2002-46 194 discloses a pneumatic tire such that a ribbon rubber is wound from a tread end on one side in a tire width direction as a start point toward a tread end on the other side, is next folded back to the one side in the tire width direction at the tread end on the other side, and is wound toward the tread end on the one side, and a winding start end and a winding terminal end of the ribbon rubber are arranged in the tread ends.

In JP-A- 2006-062 196, a method for producing a rubber member for a tire is disclosed. The method includes a process in which to an annular wound body, winding start ends of a rubber strips are fixed at inside positions in the width direction from the side edges of the rubber member R, the first winding process in which the first rubber strip is wound spirally toward the side edge, and the second rubber strip is wound spirally toward the side edge to form a first layer. The second winding process in which the first rubber strip is folded back at the side edge and wound spirally toward the side edge, and the second rubber strip is folded back at the side edge and wound spirally toward the side edge to form the second layer continuously on the outside of the first layer.

EP 1 629 964 A2 discloses a method for manufacturing a tire rubber member and a pneumatic tire involving fixedly attaching winding start points of a rubber strips at positions located further inside in a width direction than respective sides e1, e2 of a rubber member R. A first winding step of forming a first layer by spirally winding the first rubber strip towards the one side e1 and the second rubber strip towards the other side e2 up to the respective sides e1, e2. A second winding step of respectively turning the first rubber strip up at the one side and the second rubber strip at the other side e2 so as to form a second layer outside of the first layer 10. A winding end point of the rubber strips are attached to positions further inside in the width direction than the respective sides.

### SUMMARY OF THE INVENTION

However, in the pneumatic tire according to JP-A-2006-130 880, since the winding start end and the winding terminal end of the ribbon rubber are arranged in the tread center portion, and greater centrifugal force is applied to the center portion of the tread rubber in comparison with the tread end, a failure starting from the winding terminal end tends to be generated in comparison with the case that the winding start point and the winding terminal end exist at the tread ends, and a high-speed durability is deteriorated.

On the other hand, in the pneumatic tire according to JP-A-2002-46 194, since the winding start point and the winding terminal end of the ribbon rubber are arranged in the tread ends, and the tread ends are generally formed as a tapered shape, it is hard to appropriately press the ribbon rubber which is wound to a position coming to the tread end by a following roller (stitcher) in a ribbon rubber winding step, and a defect tends to be generated.

The present invention has been made by paying attention to the problem mentioned above, and an object of the present invention is to provide a pneumatic tire which suppresses a defect and has an improved high-speed durability, and a manufacturing method of the same.

The present invention provides a pneumatic tire according to independent claim 1, and a manufacturing method of a pneumatic tire according to independent claim 5. Further embodiments of the invention are realized according to the corresponding dependent claims.

The present invention employs the following means for achieving the object.

In other words, according to the present invention, there is provided a pneumatic tire including a tread rubber that is formed by a ribbon rubber which is spirally wound around a tire rotating axis, wherein the ribbon rubber is wound from a start point which is positioned closer to a center side than tread ends toward one side in a tire width direction in a tire meridian cross section, is next folded back to the other side in the tire width direction at the tread end on the one side, is wound toward the tread end on the other side beyond the start point, is next folded back to the one side in the tire width direction at the tread end on the other side, and is wound toward a terminal end which is positioned closer to the center side than the tread ends, wherein the ribbon rubber has a winding start end and a winding terminal end in the vicinity of the tread ends avoiding the tread ends and the tread center portion.

The vicinity of the tread ends means a range between 5 % and 25 % of a maximum width of the tread rubber from the tread ends toward the center side.

As mentioned above, since the winding start end and the winding terminal end of the ribbon rubber are arranged in the vicinity of the tread end avoiding the tread center portion, an influence of the centrifugal force is reduced in comparison with the case that the winding start end and the winding terminal end are arranged in the tread center portion, and it is possible to improve the high-speed durability.

At the same time, since the winding start end and the winding terminal end are arranged in the vicinity of the tread end avoiding the tread ends, it is possible to appropriately press the ribbon rubber at the winding time, and it is possible to suppress a defect.

In order to suppress the failure caused by a heat generation, and further improve the high-speed durability, it is effective that the winding terminal end of the ribbon rubber is arranged at a position at which a main groove extending in a tire peripheral direction is formed. According to this structure, at the forming position of the main groove, the thickness of the rubber becomes thinner, and heat generation at the time of the high-speed rotation is suppressed in conjunction therewith. Therefore, it is possible to suppress the failure caused by such a heat generation, and it is possible to improve the high-speed durability.

In the case that a tire having a thick tread rubber, for example, a tire for a truck and a tire for a bus is manufactured according to the ribbon winding construction method, it is often the case that a winding pitch of the ribbon rubber is narrowed and the ribbon rubber is set to a rising state. However, since it becomes hard to control the winding in conformity to the rising of the ribbon rubber, securing a thickness of the tread rubber comes to be a hard work.

Consequently, in order to easily secure the thickness of the tread rubber, it is preferable that the tread rubber has a three-layer structure portion in which the ribbon rubber wound toward the one side in the tire width direction is folded back, is wound toward the other side in the tire width direction, is thereafter folded back again and is wound toward the one side in the tire width direction, at the position closer to the center side than the tread ends.

Since the tire having the three-layer structure mentioned above can be manufactured without narrowing the winding pitch of the ribbon rubber as well as raising the ribbon rubber, on the contrary, even in a state in which the winding pitch of the ribbon rubber is widened and the ribbon rubber is laid down, it is possible to easily secure the thickness of the tread rubber.

In order to realize the securing of the thickness of the tread rubber and a winding controllability of the ribbon rubber, it is preferable that the ribbon rubber forms a first layer which has the vicinity portion of the tread end on the one side in the tire width direction as a start point, among the vicinity portions of the pair treads to the tread end on the other side in the tire width direction, next forms a second layer which is folded back to the one side in the tire width direction at the tread end on the other side in the tire width direction and reaches the tread end on the one side beyond the start point, and next forms a third layer which is folded back to the other side in the tire width direction at the tread end on the one side and has the vicinity portion of the tread end on the other side in the tire width direction as a terminal end.

The pneumatic tire mentioned above is manufactured by a manufacturing method described below. In other words, according to the present invention, there is provided a manufacturing method of a pneumatic tire, including a tread rubber forming step of forming a tread rubber by spirally winding a ribbon rubber around a tire rotating axis,
wherein the tread rubber forming step includes a stage of winding the ribbon rubber from a start point which is positioned closer to a center side than tread ends in a tire meridian cross section toward one side in a tire width direction, next folding back the ribbon rubber to the other side in the tire width direction at the tread end on the one side, winding the ribbon rubber toward the tread end on the other side beyond the start point, next folding back the ribbon rubber to the one side in the tire width direction at the tread end on the other side, and winding the ribbon rubber toward a terminal end which is positioned closer to the center side than the tread ends, and the ribbon rubber has a winding start end and a winding terminal end in the vicinity portion of the tread end avoiding the tread end and the tread center portion.

According to the manufacturing method, since the tread rubber can be formed by one winding process without disconnecting the ribbon rubber from the start point to the terminal end, it is possible to improve a forming efficiency of the tread rubber. Further, as mentioned above, it is possible to improve the high-speed durability, and it is further possible to suppress defects.

In order to further improve the high-speed durability, it is preferable to arrange the winding terminal end at the forming position of the main groove extending in the tire peripheral direction.

In order to easily secure the thickness of the tread rubber, it is desirable to form the three-layer structure portion by folding back the ribbon rubber which is wound toward the one side in the tire width direction, at the position which is closer to the center side than the tread ends, winding the ribbon rubber toward the other side in the tire width direction, and thereafter folding back the ribbon rubber again so as to wind toward the one side in the tire width direction.

In order to realize the securing of the thickness of the tread rubber and the winding controllability of the ribbon rubber, it is preferable to form a first layer by moving the winding position of the ribbon rubber to the tread end on the other side in the tire width direction from the start point of the vicinity portion of the tread end on the one side in the tire width direction, among the vicinity portions of the pair treads, next form a second layer by folding back the winding position of the ribbon rubber to the one side in the tire width direction at the tread end on the other side in the tire width direction and moving to the tread end on the one side beyond the start point, and next form a third layer by folding back the winding position of the ribbon rubber to the other side in the tire width direction at the tread end on the one side and defining the vicinity portion of the tread end on the other side in the tire width direction as a terminal end.

### BRIEF DESCRIPTION OF THE DRAWINGS

- Fig. 1: is a tire meridian cross sectional view showing a pneumatic tire according to an embodiment of the present invention;
- Fig. 2: is a view showing a manufacturing facility which is used in a forming step of a tread rubber;
- Fig. 3: is a schematic cross sectional view of a ribbon rubber;
- Fig. 4: is a cross sectional view schematically showing a forming step of the tread rubber;
- Fig. 5: is a plan view showing a winding process of the ribbon rubber;
- Fig. 6: is a conceptual view showing a moving route of a ribbon winding position;
- Fig. 7: is a cross sectional view showing a winding process of the ribbon rubber;
- Fig. 8: is a conceptual view showing another moving route of the ribbon winding position;
- Fig. 9: is a conceptual view showing a different moving route from the above route of the ribbon winding position;
- Fig. 10: is a conceptual view showing a different moving route from the above route of the ribbon winding position;
- Fig. 11: is a conceptual view showing a different moving route from the above route of the ribbon winding position; and
- Fig. 12: is a conceptual view showing a different moving route from the above route of the ribbon winding position.

### DETAILED DESCRIPTION OF THE PREFERRED EMBODIMENTS

An embodiment of the present invention will be described blow with reference to the accompanying drawings. First of all, a description will be given of a structure of a pneumatic tire according to the present invention, and a description will be given next of a manufacturing method of the pneumatic tire according to the present invention.

### Structure of pneumatic tire

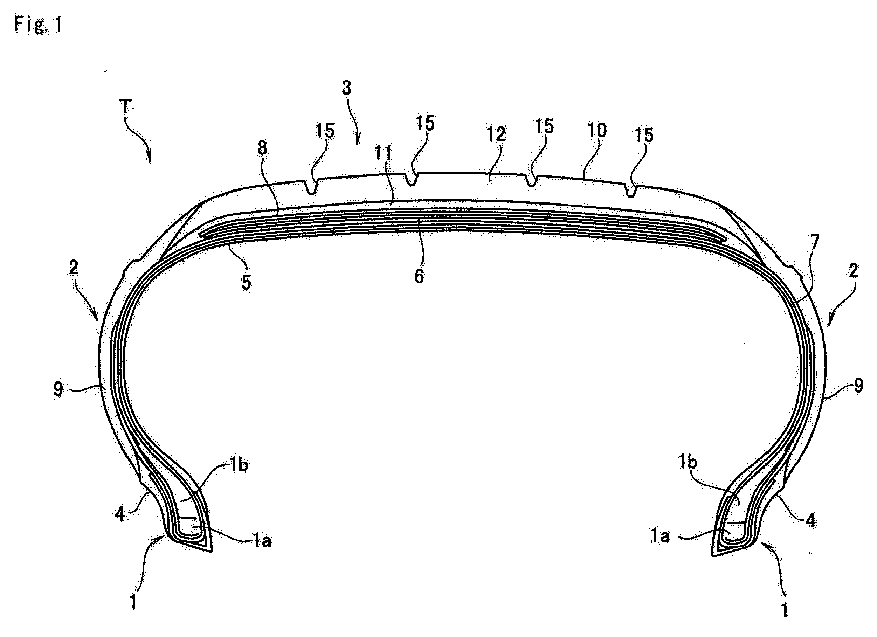

A pneumatic tire T shown in Fig. 1 is provided with a pair of bead portions 1, side wall portions 2 each of which extends to an outer side in a tire diametrical direction from each of the bead portions 1, and a tread portion 3 which is connected to an outer end in the tire diametrical direction of each of the side wall portions 2. An annular bead core 1a formed by coating a converged body of steel wires with a rubber, and a bead filler 1b made of a hard rubber are arranged in the bead portion 1.

A toroidal carcass layer 7 is arranged between a pair of bead portions 1, and an end portion thereof is locked in a state of being wound up via the bead core 1a. The carcass layer 7 is constructed by at least one (two in the present embodiment) carcass ply, and the carcass ply is formed by coating a cord extending at an angle of about 90° with respect to the tire peripheral direction with a topping rubber. An inner liner rubber 5 for retaining a pneumatic pressure is arranged in an inner periphery of the carcass layer 7.

The bead portion 1 is provided on an outer side of the carcass layer 7 with a rim strip rubber 4 which comes into contact with a rim (not shown) at the time of installation of the rim. Further, the side wall portion 2 is provided on the outer side of the carcass layer 7 with a side wall rubber 9. In the present embodiment, each of the rim strip rubber 4 and the side wall rubber 9 is formed by a conductive rubber.

In the tread portion 3, a belt layer 6 constructed by a plurality of (two in the present embodiment) belt plies is arranged on the outer side of the carcass layer 7. Each of the belt plies is formed by coating a cord which extends while inclining with respect to the tire peripheral direction with a topping rubber, and is laminated in such a manner that the cord intersects inversely to each other between the plies.

A belt reinforcing layer 8 formed by coating a cord which substantially extends in the tire peripheral direction with a topping rubber is arranged at an outer periphery of the belt layer 6, however, may be omitted as occasion demands.

In the tread portion 3, a tread rubber 10 is provided at the outer periphery of the belt layer 6. The tread rubber 10 has a cap portion 12 which constructs a ground plane, and a base portion 11 which is provided on an inner side in the tire diametrical direction of the cap portion 12. The base 11 is made of a different kind of rubber from the cap 12.

As a raw material rubber of the rubber layer mentioned above, there can be listed up a natural rubber, a styrene butadiene rubber (SBR), a butadiene rubber (BR), an isoprene rubber (IR), an isobutylene isoprene rubber (IIR) and the like, and they are used independently or are used by mixing two or more. Further, the rubbers are reinforced by a filler such as carbon black or silica, and are appropriately blended with a vulcanizing agent, a vulcanization accelerator, a plasticizer, an antioxidant or the like.

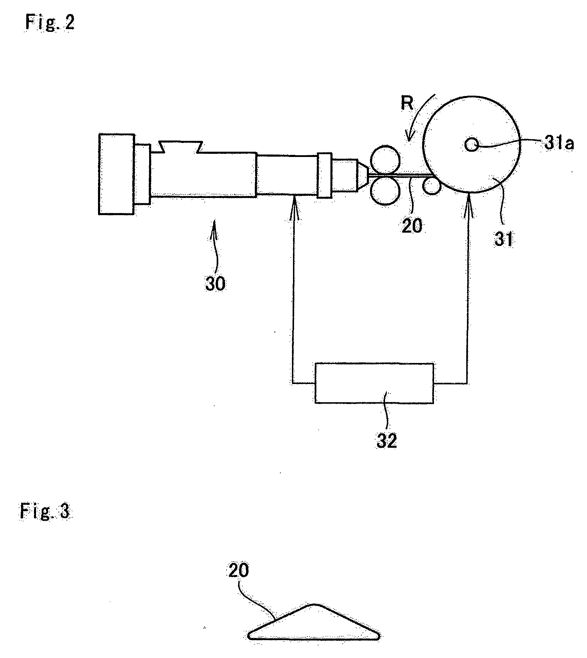

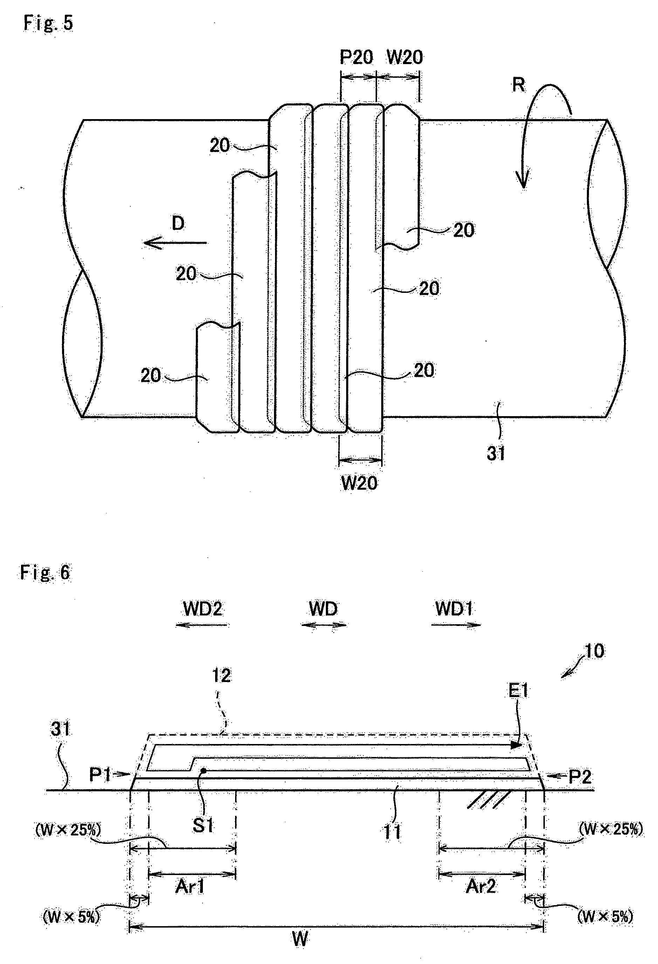

The tread rubber 10, particularly the cap portion 12 is formed by a so-called ribbon winding construction method. The ribbon winding construction method is a construction method for forming a rubber member having a desired cross sectional shape by spirally winding a narrow and unvulcanized ribbon rubber 20 shown in Fig. 3 around a tire rotating axis (refer to Fig. 2 and Fig. 5).

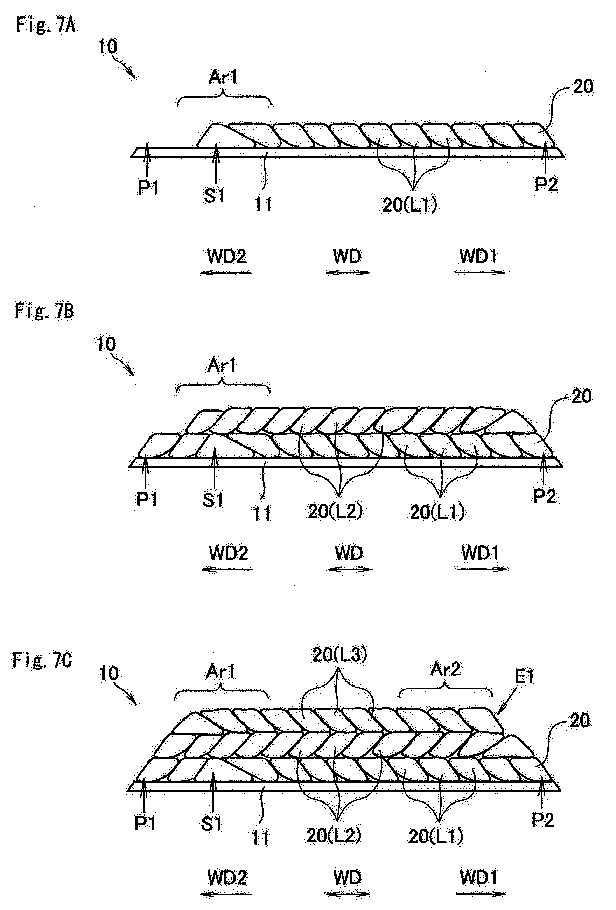

The tread rubber 10 formed by the ribbon winding construction method has a winding start end S1 and a winding terminal end E1 of the ribbon rubber 20, as shown in Fig. 7C. The winding start end S1, the winding terminal end E1 and a moving route of a winding position can be checked out in a tire meridian cross section. Details thereof will be mentioned later.

Further, with a vulcanizing treatment being applied, a main groove 15 extending in the tire peripheral direction is formed on a surface of the tread rubber 10. A projection is provided in a tire mold which is used for the vulcanizing treatment, and the main groove 15 is formed by pressing the projection against the tread rubber 10. Though an illustration will be omitted, the tread rubber 10 is appropriately provided with a transverse groove which extends in a direction intersecting the main groove 15.

### Manufacturing method of pneumatic tire

Next, a description will be given of a method of manufacturing the pneumatic tire **T**. Since the pneumatic tire **T** can be manufactured in the same manner as in a conventional tire manufacturing method, with the exception of a point relating to the tread rubber 10, a description will be given mainly of a forming step of the tread rubber 10.

The tread rubber 10 shown in Fig. 1 is formed by the ribbon winding construction method. A forming step of the tread rubber 10 includes a stage which winds the ribbon rubber 20 supplied from a ribbon rubber forming device 30 to a rotation support body 31, while rotating the rotation support body 31, as shown in Fig. 2.

The rubber ribbon 20 is formed by a nonconductive rubber, as shown in Fig. 3. A lower side in Fig. 3 comes to an inner peripheral side which is opposed to the rotation support body 31, at the winding time. The width and the thickness of the ribbon rubber (which may be called as a rubber strip) are not particularly limited, however, are preferably desirable to be set between 15 mm and 40 mm in width and between 0.5 mm to 3.0 mm in thickness.

As shown in Fig. 2, the ribbon rubber forming device 30 is structured so as to form the ribbon rubber 20 by extruding the rubber. The rotation support body 31 is structured so as to achieve a rotation in a direction **R** around an axis 31 a, and a movement in an axial direction. A control device 32 carries out the operation control of the ribbon rubber forming device 30 and the rotation support body 31.

In the present embodiment, a cross section of the ribbon rubber 20 is formed as a triangular shape, however, is not limited to this, but may also be formed in other shapes such as an oval shape, a quadrangular shape and the like.

Further, the rotation support body 31 is structured so as to move in the axial direction, however, the ribbon rubber forming device 30 may be moved with respect to the rotation support body 31. In other words, it is possible to employ any structure as long as the rotation support body 31 can move relatively along the axis direction with respect to the ribbon rubber forming device 30.

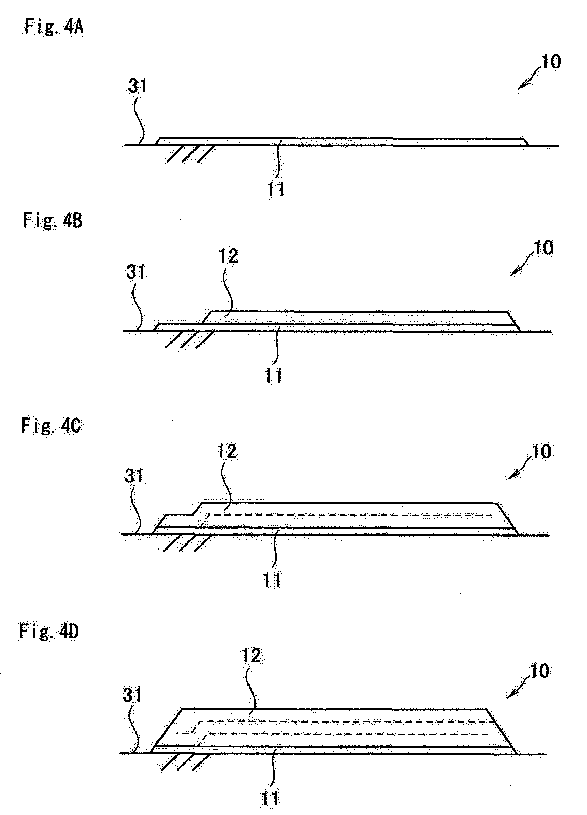

In the forming step of the tread rubber 10, first of all, as shown in Fig. 4A, the base portion 11 is formed in an outer peripheral surface of the rotation support body 31. Though an illustration will be omitted, the belt layer 6 and the belt reinforcing layer 8 are provided previously on an outer peripheral surface of the rotation support body 31 (refer to Fig. 1), and the base portion 11 is formed on them.

The base portion 11 may be formed by any one of a so-called extrusion molding method and a ribbon winding construction method. The extrusion molding method is a construction method which has a step of extruding and molding an unvulcanized band-like rubber member having a desired cross sectional shape, and jointing end portions thereof so as to form annularly.

Next, as shown in Figs. 4B to 4D sequentially, the cap portion 12 is formed on the outer peripheral surface of the base 11, and the tread rubber 10 shown in Fig. 1 is formed. In this case, as shown in Fig. 5, a winding pitch P20 of the ribbon rubber 20 is set to be smaller than a ribbon width W20 of the ribbon rubber 20.

Accordingly, the adjacent ribbon rubbers 20 and 20 are spirally wound in a state of being in contact with each other. An arrow **D** indicates a moving direction of the ribbon winding position, and the adjacent ribbon rubbers 20 overlap their edge portions with each other along the direction.

Fig. 6 conceptually shows a moving route of the winding position of the ribbon rubber 20, in the forming step of the tread rubber shown in Fig. 4. As a matter of convenience for description, one side (a right side in the drawing) of the tire width direction WD in the tire meridian cross section is defined as WD1, and the other side is defined as WD2 (a left side in the drawing).

The ribbon rubber is wound from the start point S1 which is positioned closer to the center side than tread ends P1 and P2 in the tire meridian cross section toward the tire width direction WD1 side. Next, the ribbon rubber is folded back to a tire width direction WD2 side at the tread end P2 closer to the WD1 side, and is wound toward the tread end P1 on the WD2 side beyond the start point S1. Next, the ribbon rubber is folded back to the tire width direction WD1 side at the tread end P1 in the WD2 side, and is wound toward the end point E1 which is positioned closer to the center side than the tread end P2.

Further, as shown in Fig. 6, in the case that a range between 5 % and 25 % of the maximum width W of the tread rubber from the tread ends P1 and P2 toward the center side is defined as tread end vicinity portions Ar1 and Ar2, the ribbon rubber has the winding start end S1 and the winding terminal end E1 in the tread end vicinity portions Ar1 and Ar2. A value of 5 % or more in the definition of the tread end vicinity portion means avoidance of the tapered tread end. Further, 25 % or less means avoidance of the tread center portion, however, 20 % or less is preferable for seeking out an improvement of the high-speed durability.

Specifically, the ribbon rubber 20 is wound, as sequentially shown in Figs. 7A to 7C. In this case, Fig. 7 is drawn conceptually, and a cross sectional area ratio of each of the ribbon rubbers 20 with respect to the tread rubber 10 may be smaller.

Fig. 7A corresponds to the stage in Fig. 4B, and the winding position of the ribbon rubber moves to the tire width direction WD1 side (the right side) by defining the tread end vicinity portion Ar1 on the tire width direction WD2 side (the left side) among the pair of tread end vicinity portions Ar1 and Ar2 as the start point S1, and reaches the tread end P2 on the tire width direction WD1 side (the right side). Accordingly, a first layer L1 of the ribbon rubber 20 is formed.

Fig. 7B corresponds to the stage in Fig. 4C, and the winding position of the ribbon rubber folds back to the tire width direction WD2 side (the left side) at the tread end P2 on the tire width direction WD 1 side (the right side), goes over the start point S1, and reaches the tread end P1 on the tire width direction WD2 side (the left side). Accordingly, a second layer L2 of the ribbon rubber 20 is formed.

Fig. 7C corresponds to the stage in Fig. 4D, and the winding position of the ribbon rubber folds back to the tire width direction WD1 side (the right side) at the tread end P1 in the tire width direction WD2 side (the left side), reaches the tread end vicinity portion Ar2 in the tire width direction WD1 side (the right side), and defines this as the end point E1. Accordingly, a third layer L3 of the ribbon rubber 20 is formed.

As mentioned above, the pneumatic tire of the present embodiment provides a pneumatic tire **T** in which the tread rubber 10 is formed by the ribbon rubber 20 spirally wound around the tire rotating axis, wherein the ribbon rubber 20 is wound toward the one side (WD1) in the tire width direction WD from the start point S1 which is positioned closer to the center side than the tread ends P1 and P2 in the tire meridian cross section, is next folded back to the other side (WD2) in the tire width direction WD at the tread end P2 on the one side (W1), goes over the start point S1 so as to be wound toward the tread end P1 on the other side (WD2), is next folded back to the one side (WD 1) in the tire width direction WD at the tread end P1 on the other side (WD2), and is wound toward the end point E1 which is positioned closer to the center side than the tread ends P1 and P2, and wherein the ribbon rubber 20 has the winding start end S1 and the winding terminal end E1 in the tread end vicinity portions Ar1 and Ar2 avoiding the tread ends P1 and P2 and the tread center portion.

Further, the pneumatic tire of the present embodiment is produced by the following manufacturing method. In other words, the manufacturing method of the pneumatic tire of the present embodiment is a manufacturing method of a pneumatic tire including a tread rubber forming step of forming the tread rubber 10 by spirally winding the ribbon rubber 20 around the tire rotating axis, wherein the tread rubber forming step includes: a stage of winding the ribbon rubber 20 from the start point S1 which is positioned closer to the center side than the tread ends P1 and P2 in the tire meridian cross section toward the one side (WD1) in the tire width direction WD; next folding back the ribbon rubber to the other side (WD2) in the tire width direction WD at the tread end P2 on the one side (WD1), winding the ribbon rubber toward the tread end P1 on the other side (WD2) beyond the start point S1; next folding back the ribbon rubber to the one side (WD1) in the tire width direction WD at the tread end P1 on the other side (WD2); and winding the ribbon rubber toward the end point E1 which is positioned closer to the center side than the tread ends P1 and P2; and the ribbon rubber 20 has the winding start end S1 and the winding terminal end E1 in the tread end vicinity portions Ar1 and Ar2 avoiding the tread ends P1 and P2 and the tread center portion.

The tread end vicinity portions Ar1 and Ar2 mean a range between 5 and 25 % of a tread rubber maximum width W from the tread ends P1 and P2 toward the center side.

According to the manufacturing method mentioned above, since the tread rubber 10 can be formed by one winding process without disconnecting the ribbon rubber 20 from the start point S1 to the end point E1, it is possible to improve the forming efficiency of the tread rubber 10.

Further, since the winding start end S1 and the winding terminal end E1 of the ribbon rubber 20 are arranged at the tread end vicinity portions Ar1 and Ar2 avoiding the tread center portion, it is possible to reduce the influence of the centrifugal force and to improve the high-speed durability, in comparison with the case that the winding start end S1 and the winding terminal end E1 are arranged in the tread center portion.

In addition, since the winding start end S1 and the winding terminal end E1 are arranged at the tread end vicinity portions Ar1 and Ar2 avoiding the tread ends P1 and P2, it is possible to appropriately push the ribbon rubber 20, and it is possible to suppress the defect.

Particularly, in the pneumatic tire of the present embodiment and the manufacturing method of the same, the ribbon rubber 20 forms the first layer L1 which reaches the tread end P2 on the other side (WD1) in the tire width direction by defining a tread end vicinity portion Ar1 on the one side (WD2) in the tire width direction WD among the paired tread end vicinity portions Ar1 and Ar2 as the start point S1, next forms the second layer L2 which reaches the tread end P1 on the one side (WD2) beyond the start point S1 by folding back to the one side (WD2) in the tire width direction at the tread end P2 on the other side (WD1) in the tire width direction, and next forms the third layer L3 which defines the tread end vicinity portion Ar2 on the other side (WD1) in the tire width direction as the end point E1 by folding back to the other side (WD1) in the tire width direction at the tread end P1 on the one side (WD2).

According to the structure mentioned above, since it is possible to secure the thickness of the tread rubber 10 without narrowing the winding pitch P20 of the ribbon rubber 20 as well as raising the ribbon rubber 20, it is possible to improve both the securing of the thickness and the winding controllability of the ribbon rubber. Particularly, it is useful for forming the tire which requires a greater thickness such as a truck and a bus.

### Other Embodiments

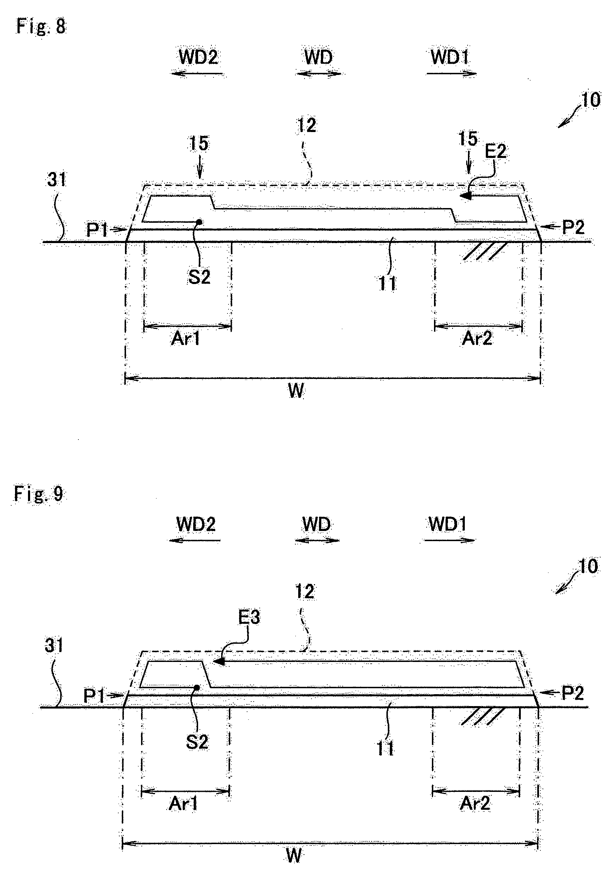

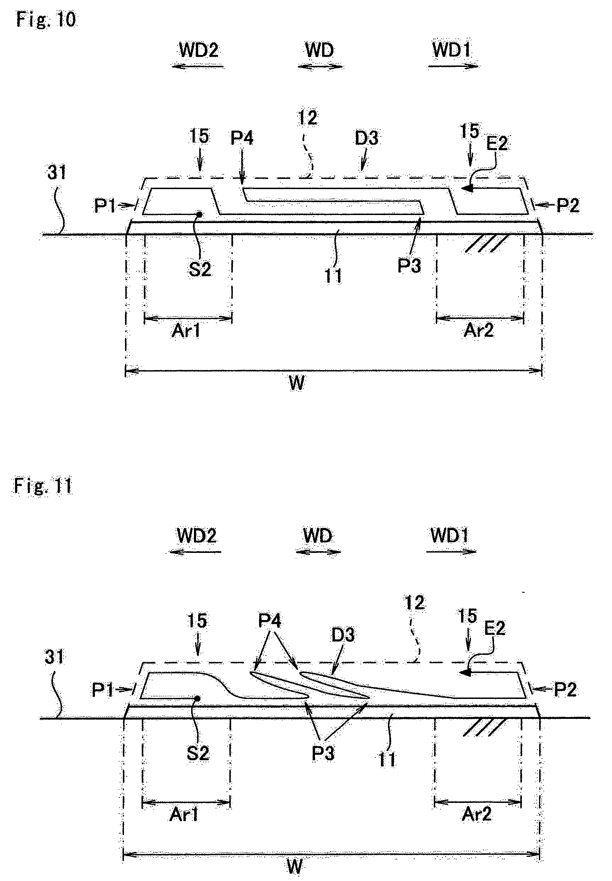

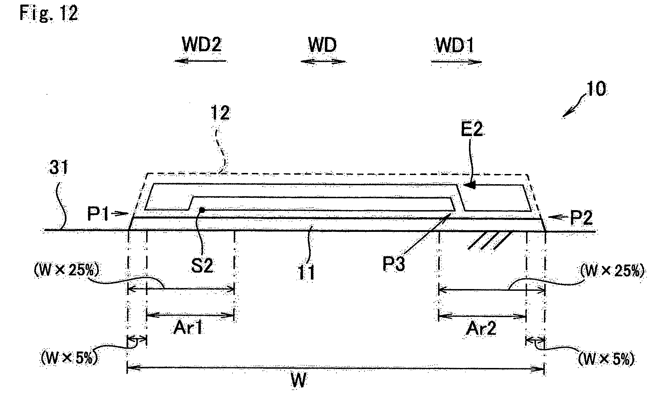

(1) The present invention is not limited to the present embodiment as long as the ribbon rubber 20 is wound without being disconnected on the way and the winding start end and terminal end are at the tread end vicinity portion.
   For example, the winding way shown in Fig. 8 can be envisaged. In other words, the winding position of the ribbon rubber 20 reaches the tread end P1 on the one side (WD2) in the tire width direction by defining the tread end vicinity portion Ar1 on the one side (WD2) as a start point S2, folds back to the other side (WD1) in the tire width direction at the tread end P1 so as to reach the tread end P2 on the other side (WD1) in the tire width direction beyond the start point S2, folds back to the one side (WD2) in the tire width direction at the tread end P2, reaches the tread end vicinity portion Ar2 on the other side (WD1), and defines the tread end vicinity portion Ar2 as a terminal end E2.
   In this example, the winding terminal end E2 of the ribbon rubber 20 is arranged at the forming position of the main groove 15 which extends in the tire peripheral direction, as shown in Fig. 8. In the forming position of the main groove 15, since the thickness of the rubber is reduced, and the heat generation at the time of the high-speed rotation is suppressed in conjunction therewith, it is possible to suppress failures which are caused by such a heat generation, and it is possible to further improve the high-speed durability.
(2) As a different winding method from the above method, a winding start end S2 and a winding terminal end E3 of the ribbon rubber 20 may be arranged only at the one tread end vicinity portion Ar1 among the paired tread end vicinity portions Ar1 and Ar2, as shown in Fig. 9.
(3) As a different winding method from the above method, there can be listed up a structure in which the tread rubber has a three-layer structure portion D3 at a position which is closer to the center side than the tread ends P1 and P2, by folding back the ribbon rubber which is wound toward the one side (WD1) in the tire width direction at a position P3, winding toward the other side (WD2) in the tire width direction, thereafter folding back again at a position P4, and winding toward the one side (WD1) in the tire width direction, as shown in Fig. 10.
   According to the structure mentioned above, it is possible to easily secure the thickness of the tread rubber 10 without narrowing the winding pitch P20 of the ribbon rubber 20 as well as raising the ribbon rubber 20. In an example shown in Fig. 11, a plurality of three-layer structure portions D3 are formed.
(4) As a different winding method from the above method, a winding method shown in Fig. 12 can be listed up. In other words, the ribbon rubber is wound toward the other side (WD1) in the tire width direction by defining the tread end vicinity portion Ar1 on the one side (WD2) as the start point S2.

Next, the ribbon rubber is folded back at the position P3 so as to be wound toward the one side (WD2) in the tire width direction beyond the start point S2, is folded to the other side (WD1) in the tire width direction at the tread end P1 on the one side (WD2), and is wound toward the tread end P2 on the other side (WD1) beyond the start point S2. Next, the ribbon rubber is folded back at the tread end P2 on the other side (WD1), and is wound to the terminal end E2 which is positioned closer to the center side than the tread end P2.

According to the structure mentioned above, since it is possible to keep the tread end P2 and the winding terminal end E2 away from each other by folding back the winding terminal end E2, it is possible to further reduce the problem caused by the movement of the winding terminal end E2 closer to the tread end P2. As one example of the problem, for example, there can be listed up a defect caused by a short pressing of the ribbon rubber by the following roller (stitcher).

Further, it is preferable that the winding start end S1 and the winding terminal end E1 are kept away at 180° in the tire peripheral direction. In other words, since a radial force variation (RFV) is improved and a ground surface pressure distribution on a periphery becomes uniform as long as the winding start end S1 and the winding terminal end E1 are in a positional relationship which is symmetrical around the tire rotating axis, it is possible to improve the high-speed durability.

### EXAMPLES

A description will be given below of examples which effectively show the structure and the effect of the present invention. In this case, the high-speed durability was evaluated by using a test tire having a tire size 215/45R17. The high-speed durability was tested on the basis of a condition about tire of a speed mark H (210 km/h) which was defined as load/speed performance test procedure by a supplementary provision 7 of Regulation No. 30 of Economic Commission for Europe (Regulation No. 30 Uniform Provisions Concerning the Approval of Pneumatic Tires for Motor Vehicles and Their Trailers).

The high-speed durability was evaluated by traveling at a high speed by a drum tester until the tire broke down, according to a method of increasing the traveling speed at 10 km/h per ten minutes. Therefore, the higher speed indicates the more excellent high-speed durability.

### Comparative Example

The tire was produced by arranging the winding start end of the ribbon rubber to the center portion in the tire width direction, winding the ribbon rubber like a infinity symbol shape, and arranging the winding terminal end at the center portion (the equator portion) in the tire width direction (refer to JP-A-2006-130 880.

### Example 1

The tread rubber was formed by winding the ribbon rubber via the route shown in Fig. 6. The winding start end S1 and the winding terminal end E1 of the ribbon rubber 20 were arranged respectively at positions which were 12.5 % of the maximum width W of the tread rubber from the tread ends P1 and P2 toward the center side. The same structures as in the Comparative Example were applied with the exception of the above.

### Example 2

The tread rubber was formed by winding the ribbon rubber via the route shown in Fig. 8. The winding start end S2 and the winding terminal end E2 of the ribbon rubber 20 were arranged respectively at positions which were 20 % of the maximum width W of the tread rubber from the tread ends P1 and P2 toward the center side. The same structures as in the Comparative Example were applied with the exception of the above.

### Example 3

The tread rubber was formed by winding the ribbon rubber via the route shown in Fig. 9. The winding start end S2 and the winding terminal end E3 of the ribbon rubber 20 were arranged respectively at positions which were 24.1 % of the maximum width W of the tread rubber from the tread end P1 toward the center side. The same structures as in the Comparative Example were applied with the exception of the above.

### Example 4

The tread rubber was formed by winding the ribbon rubber via the route shown in Fig. 10. The winding start end S2 and the winding terminal end E2 of the ribbon rubber 20 were arranged respectively at positions which were 23.2 % of the maximum width W of the tread rubber from the tread ends P1 and P2 toward the center side. The same structures as in the Comparative Example were applied with the exception of the above.

### Example 5

The tread rubber was formed by winding the ribbon rubber via the route shown in Fig. 12. The winding start end S2 and the winding terminal end E2 of the ribbon rubber 20 were arranged respectively at positions which were 20 % the maximum width W of the tread rubber from the tread ends P1 and P2 toward the center side. The same structures as in the Comparative Example were applied with the exception of the above.

**Table 1**

| | Comparative Example | Example 1 | Example 2 | Example 3 | Example 4 | Example 5 |
|---|---|---|---|---|---|---|
| High-speed durability | 280 km/h | 310 km/h | 310 km/h | 300 km/h | 290 km/h | 300 km/h |

In the Comparative Example, the failure was generated at 280 km/h, however, the speeds at which the failure was generated were higher in all the Examples 1 to 5 than in the Comparative Example. Accordingly, it is known that the high-speed durability is improved. In this case, it can be thought that the Example 4 is lower in the high-speed durability in comparison with the Examples 1 to 3 since the fold-back end of the ribbon rubber 20 exists at the tread intermediate portion between the paired tread end vicinity portions Ar1 and Ar2.

Therefore, in the light of pursuit of the high-speed durability, it is thought to be preferable that the tread intermediate portion (including the tire equator) does not have any fold-back end.

It is possible to apply the structure employed in each of the embodiments to the other optional embodiment. The particular structure of each of the portions is not limited to the embodiments mentioned above, but can be variously modified within a range which does not deviate from the scope of the present invention.

### List of Preference Signs

1 = bead portion
1a = bead core
1b = bead filler
2 = side wall portion
3 = tread portion
4 = rim strip rubber
5 = inner liner rubber
6 = belt layer
7 = carcass layer
8 = belt reinforcing layer
9 = side wall rubber
10 = tread rubber
11 = base portion
12 = cap portion
15 = main groove
20 = ribbon rubber
30 = ribbon rubber forming device
31 = rotation support body
31a = axis
32 = control device
T = tire
S1 = start point
E1 = end point
P1, P2 = tread ends
Ar1, Ar2 = vicinity portions
WD = tire width direction

## Claims

1. A pneumatic tire comprising:
- a tread rubber (10), the tread rubber (10) being formed by a ribbon rubber (20) which is spirally wound around a tire rotating axis,
- wherein the ribbon rubber (20) has a winding start end (S1) and a winding terminal end (E1) in tread end vicinity portions (Ar1, Ar2) except for tread ends (P1, P2) and a tread center portion, the tread end vicinity portions (Ar1, Ar2) being in a range from equal to or more than 5 % to equal to or less than 25 % of the maximum width (W) of the tread rubber (10) from the tread ends (P1, P2) toward the center side, and
- wherein the ribbon rubber (20) is wound from the winding start end (S1) toward one side in the tire width direction (WD) in a tire meridian cross section, is next folded back to the other side in the tire width direction (WD) at the tread end on the one side, is wound toward the tread end on the other side beyond the winding start end (S1), is next folded back to the one side in the tire width direction (WD) at the tread end on the other side, and is wound toward the winding terminal end (E1).

2. The pneumatic tire according to claim 1,
wherein the winding terminal end (E1) is arranged at a position at which a main groove (15) extending in a tire peripheral direction is formed.

3. The pneumatic tire according to claim 1 or 2,
wherein the tread rubber (10) has a three-layer structure portion in which the ribbon rubber (20) wound toward the one side in the tire width direction (WD) is folded back, is wound toward the other side in the tire width direction (WD), is thereafter folded back again and is wound toward the one side in the tire width direction (WD), at the position closer to the center side than the tread ends (P1, P2).

4. The pneumatic tire according to any one of claims 1 to 3,
wherein the ribbon rubber (20) has the winding start end (S1) arranged in the tread end vicinity portion (Ar1) on the one side in the tire width direction (WD), and the winding terminal end (E1) arranged in the tread end vicinity portion (Ar2) on the other side in the tire width direction (WD), and
wherein the ribbon rubber (20) forms a first layer which reaches the tread end on the other side in the tire width direction (WD) from the winding start end (S1), next forms a second layer which is folded back to the one side in the tire width direction (WD) at the tread end on the other side in the tire width direction and reaches the tread end on the one side beyond the winding start end (S1), and next forms a third layer which is folded back to the other side in the tire width direction (WD) at the tread end on the one side and reaches the winding terminal end (E1).

5. A manufacturing method of a pneumatic tire, comprising:
- a tread rubber (10) forming step of forming a tread rubber (10) by spirally winding a ribbon rubber (20) around a tire rotating axis,
- wherein the ribbon rubber (20) has a winding start end (S1) and a winding terminal end (E1) in tread end vicinity portions (Ar1, Ar2) except for tread ends (P1, P2) and a tread center portion, the tread end vicinity portions (Ar1, Ar2) being in a range from equal to or more than 5 % to equal to or less than 25 % of the maximum width (W) of the tread rubber (10) from the tread ends (P1, P2) toward the center side, and
- wherein the tread rubber forming step comprises a stage of winding the ribbon rubber (20) from a winding start end (S1) toward one side in the tire width direction (WD) in a tire meridian cross section, next folding back the ribbon rubber (20) to the other side in the tire width direction (WD) at the tread end on the one side, winding the ribbon rubber (20) toward the tread end on the other side beyond the winding start end (S1), next folding back the ribbon rubber (20) to the one side in the tire width direction (WD) at the tread end on the other side, and winding the ribbon rubber (20) toward the winding terminal end (E1).

6. The manufacturing method according to claim 5,
wherein the winding terminal end (E1) is arranged at the forming position of the main groove (15) extending in the tire peripheral direction.

7. The manufacturing method according to claim 5 or 6,
wherein the three-layer structure portion is formed by folding back the ribbon rubber (20) which is wound toward the one side in the tire width direction (WD), at the position which is closer to the center side than the tread ends (P1, P2), winding the ribbon rubber (20) toward the other side in the tire width direction (WD), and thereafter folding back the ribbon rubber (20) again so as to wind toward the one side in the tire width direction (WD).

8. The manufacturing method according to any one of claim 5 to 7,
wherein a first layer is formed by moving the winding position of the ribbon rubber (20) to the tread end on the other side in the tire width direction (WD) from the winding start end (S1) of the vicinity portion of the tread end on the one side in the tire width direction (WD), among the vicinity portions of the pair of tread end vicinity portions, a second layer is next formed by folding back the winding position of the ribbon rubber (20) to the one side in the tire width direction (WD) at the tread end on the other side in the tire width direction (WD) and moving to the tread end on the one side beyond the winding start end (S1), and a third layer is next formed by folding back the winding position of the ribbon rubber (20) to the other side in the tire width direction at the tread end on the one side and defining the vicinity portion of the tread end on the other side in the tire width direction (WD) as a winding terminal end (E1).

## Patentansprüche

1. Luftreifen, der Folgendes aufweist:
- ein Laufflächengummimaterial (10), wobei das Laufflächengummimaterial (10) durch ein bandförmiges Gummimaterial (20) gebildet ist, das spiralförmig um eine Reifenrotationsachse gewickelt ist,
- wobei das bandförmige Gummimaterial (20) ein Wickelanfangsende (S1) und ein Wickelabschlussende (E1) in Laufflächenenden-nahen Bereichen (Ar1, Ar2) mit Ausnahme von Laufflächenenden (P1, P2) und einem zentralen Laufflächenbereich aufweist, wobei sich die Laufflächenenden-nahen Bereiche (Ar1, Ar2) in einem Bereich von gleich oder mehr als 5 % bis gleich oder mehr als 25 % der maximalen Breite (W) des Laufflächengummimaterials (10) von den Laufflächenenden (P1, P2) zu der Zentrumsseite hin befinden, und
- wobei das bandförmige Gummimaterial (20) in einem Reifenmeridianschnitt von dem Wickelanfangsende (S1) in Richtung auf die eine Seite in der Reifenbreitenrichtung (WD) gewickelt ist, sodann an dem Laufflächenende auf der einen Seite zu der anderen Seite in der Reifenbreitenrichtung (WD) zurück umgeschlagen ist, in Richtung auf das Laufflächenende auf der anderen Seite über das Wickelanfangsende (S1) hinaus gewickelt ist, sodann an dem Laufflächenende auf der anderen Seite zu der einen Seite in der Reifenbreitenrichtung (WD) zurück umgeschlagen ist sowie in Richtung auf das Wickelabschlussende (E1) gewickelt ist.

2. Luftreifen nach Anspruch 1,
wobei das Wickelabschlussende (E1) an einer Stelle angeordnet ist, an der eine sich in Reifenumfangsrichtung erstreckende Hauptnut (15) gebildet ist.

3. Luftreifen nach Anspruch 1 oder 2,
wobei das Laufflächengummimaterial (10) einen dreilagigen Strukturbereich aufweist, in dem das zu der einen Seite in der Reifenbreitenrichtung (WD) gewickelte bandförmige Gummimaterial (20) zurück umgeschlagen ist, in Richtung auf die andere Seite in der Reifenbreitenrichtung (WD) gewickelt ist, danach wiederum zurück umgeschlagen ist und in Richtung auf die eine Seite in der Reifenbreitenrichtung (WD) gewickelt ist, und zwar an der Stelle, die sich näher bei der Zentrumsseite als die Laufflächenenden (P1, P2) befindet.

4. Luftreifen nach einem der Ansprüche 1 bis 3,
wobei bei dem bandförmigen Gummimaterial (20) das Wickelanfangsende (S1) in dem Laufflächenenden-nahen Bereich (Ar1) auf der einen Seite in der Reifenbreitenrichtung (WD) angeordnet ist und das Wickelabschlussende (E1) in dem Laufflächenenden-nahen Bereich (Ar2) auf der anderen Seite in der Reifenbreitenrichtung (WD) angeordnet ist, und
wobei das bandförmige Gummimaterial (20) eine erste Lage bildet, die ausgehend von dem Wickelanfangsende (S1) das Laufflächenende auf der anderen Seite in der Reifenbreitenrichtung (WD) erreicht, als nächstes eine zweite Lage bildet, die an dem Laufflächenende auf der anderen Seite in der Reifenbreitenrichtung (WD) zu der einen Seite in der Reifenbreitenrichtung zurück umgeschlagen ist und das Laufflächenende auf der einen Seite jenseits des Wickelanfangsendes (S1) erreicht, und sodann eine dritte Lage bildet, die an dem Laufflächenende auf der einen Seite zu der anderen Seite in der Reifenbreitenrichtung (WD) zurück umgeschlagen ist und das Wickelabschlussende (E1) erreicht.

5. Herstellungsverfahren für einen Luftreifen, das folgende Schritte aufweist:
- einen Schritt zum Bilden von Laufflächengummimaterial (10), in dem ein Laufflächengummimaterial (10) durch spiralförmiges Wickeln eines bandförmigen Gummimaterials (20) um eine Reifenrotationsachse gebildet wird,
- wobei das bandförmige Gummimaterial (20) ein Wickelanfangsende (S1) und ein Wickelabschlussende (E1) in Laufflächenenden-nahen Bereichen (Ar1, Ar2) mit Ausnahme von Laufflächenenden (P1, P2) und einem zentralen Laufflächenbereich aufweist, wobei sich die Laufflächenenden-nahen Bereiche (Ar1, Ar2) in einem Bereich von gleich oder mehr als 5 % bis gleich oder mehr als 25 % der maximalen Breite (W) des Laufflächengummimaterials (10) von den Laufflächenenden (P1, P2) zu der Zentrumsseite hin befinden, und
- wobei der Schritt zum Bilden des Laufflächengummimaterials ein Stadium aufweist, in dem das bandförmige Gummimaterial (20) in einem Reifenmeridianschnitt von einem Wickelanfangsende (S1) in Richtung auf die eine Seite in der Reifenbreitenrichtung (WD) gewickelt wird, sodann das bandförmige Gummimaterial (20) an dem Lauf-flächenende auf der einen Seite zu der anderen Seite in der Reifenbreitenrichtung (WD) zurück umgeschlagen wird, das bandförmige Gummimaterial (20) in Richtung auf das Laufflächenende auf der anderen Seite über das Wickelanfangsende (S1) hinaus gewickelt wird, sodann das bandförmige Gummimaterial (20) an dem Laufflächenende auf der anderen Seite zu der einen Seite in der Reifenbreitenrichtung (WD) zurück umgeschlagen wird sowie das bandförmige Gummimaterial (20) in Richtung auf das Wickelabschlussende (E1) gewickelt wird.

6. Herstellungsverfahren nach Anspruch 5,
wobei das Wickelabschlussende (E1) an der Ausbildungsstelle der sich in der Reifenumfangsrichtung erstreckenden Hauptnut (15) angeordnet wird.

7. Herstellungsverfahren nach Anspruch 5 oder 6,
wobei der dreilagige Strukturbereich gebildet wird, indem das zu der einen Seite in der Reifenbreitenrichtung (WD) gewickelte bandförmige Gummimaterial (20) an der Stelle, die sich näher bei der Zentrumsseite als die Laufflächenenden (P1, P2) befindet, zurück umgeschlagen wird, das bandförmige Gummimaterial (20) in Richtung auf die andere Seite in der Reifenbreitenrichtung (WD) gewickelt wird und anschließend das bandförmige Gummimaterial (20) wiederum zurück umgeschlagen wird und somit in Richtung auf die eine Seite in der Reifenbreitenrichtung (WD) gewickelt wird.

8. Herstellungsverfahren nach einem der Ansprüche 5 bis 7,
wobei eine erste Lage gebildet wird, indem die Wickelposition des bandförmigen Gummimaterials (20) von dem Wickelanfangsende (S1) des Bereichs in der Nähe des Laufflächenendes auf der einen Seite in der Reifenbreitenrichtung (WD) von den Bereichen in der Nähe des Paares von Laufflächenenden-nahen Bereichen zu dem Laufflächenende auf der anderen Seite in der Reifenbreitenrichtung (WD) verlagert wird, als nächstes eine zweite Lage gebildet wird, indem die Wickelposition des bandförmigen Gummimaterials (20) an dem Laufflächenende auf der anderen Seite in der Reifenbreitenrichtung (WD) zu der einen Seite in der Reifenbreitenrichtung (WD) zurück umgeschlagen wird und zu dem Laufflächenende auf der einen Seite jenseits des Wickelanfangsendes (S1) verlagert wird, und sodann eine dritte Lage gebildet wird, indem die die Wickelposition des bandförmigen Gummimaterials (20) an dem Laufflächenende auf der einen Seite zu der anderen Seite in der Reifenbreitenrichtung zurück umgeschlagen wird und der Bereich in der Nähe des Laufflächenendes auf der anderen Seite in der Reifenbreitenrichtung (WD) als Wickelabschlussende (E1) definiert wird.

## Revendications

1. Bandage pneumatique comprenant:
- un caoutchouc de bande de roulement (10), le caoutchouc de bande de roulement (10) étant formé d'un ruban de caoutchouc (20) qui est enroulé en spirale autour d'un axe de rotation du pneumatique,
- dans lequel le ruban de caoutchouc (20) comporte une extrémité de départ d'enroulement (S1) et une extrémité de fin d'enroulement (E1) dans les portions voisines des extrémités de bande de roulement (Ar1, Ar2) à l'exception des extrémités de bande de roulement (P1, P2) et une portion centrale de bande de roulement, les portions voisines des extrémités de bande de roulement (Ar1, Ar2) étant dans une plage depuis une valeur égale ou supérieure à 5 % jusqu'à une valeur égale ou inférieure à 25 % de la largeur maximum (W) du caoutchouc de bande de roulement (10) depuis les extrémités de bande de roulement (P1, P2) vers le côté central, et
- dans lequel le ruban de caoutchouc (20) est enroulé depuis l'extrémité de départ d'enroulement (S1) vers un premier côté dans la direction en largeur du pneumatique (WD) dans une section transversale méridienne du pneumatique, est ensuite replié vers l'autre côté dans la direction en largeur du pneumatique (WD) à l'extrémité de bande de roulement sur un côté, est enroulé vers l'extrémité de bande de roulement sur l'autre côté au-delà de l'extrémité de départ d'enroulement (SI), est ensuite replié vers le premier côté dans la direction en largeur du pneumatique (WD) à l'extrémité de bande de roulement sur l'autre côté, et est enroulé vers l'extrémité de fin d'enroulement (E1).

2. Bandage pneumatique selon la revendication 1,
dans lequel l'extrémité de fin d'enroulement (E1) est agencée à une position à laquelle est formée une gorge principale (15) s'étendant dans une direction périphérique du pneumatique.

3. Bandage pneumatique selon la revendication 1 ou 2,
dans lequel le caoutchouc de bande de roulement (10) possède une portion à structure en trois couches dans laquelle le ruban de caoutchouc (20) enroulé vers le premier côté dans la direction en largeur du pneumatique (WD) est replié, est enroulé vers l'autre côté dans la direction en largeur du pneumatique (WD), est ensuite replié à nouveau et est enroulé vers le premier côté dans la direction en largeur du pneumatique (WD), à la position plus rapprochée du côté central que les extrémités de bande de roulement (P1, P2).

4. Bandage pneumatique selon l'une quelconque des revendications 1 à 3,
dans lequel le ruban de caoutchouc (20) est tel que l'extrémité de départ d'enroulement (S1) est agencée dans la portion voisine de l'extrémité de bande de roulement (Ar1) sur le premier côté dans la direction en largeur du pneumatique (WD), et l'extrémité de fin d'enroulement (E1) est agencée dans la portion voisine de l'extrémité de bande de roulement (Ar2) sur l'autre côté dans la direction en largeur du pneumatique (WD), et dans lequel le ruban de caoutchouc (20) forme une première couche qui atteint l'extrémité de bande de roulement sur l'autre côté dans la direction en largeur du pneumatique (WD) depuis l'extrémité de départ d'enroulement (SI), forme ensuite une seconde couche qui est repliée vers le premier côté dans la direction en largeur du pneumatique (WD) à l'extrémité de bande de roulement sur l'autre côté dans la direction en largeur du pneumatique et atteint l'extrémité de bande de roulement sur le premier côté au-delà de l'extrémité de départ d'enroulement (SI), et forme ensuite une troisième couche qui est repliée vers l'autre côté dans la direction en largeur du pneumatique (WD) à l'extrémité de bande de roulement sur le premier côté et atteint l'extrémité de fin d'enroulement (E1).

5. Procédé de fabrication d'un bandage pneumatique, comprenant:
- une étape de formation de caoutchouc de bande de roulement (10) consistant à former un caoutchouc de bande de roulement (10) en enroulant en spirale un ruban de caoutchouc (20) autour d'un axe de rotation du pneumatique,
- dans lequel le ruban de caoutchouc (20) possède une extrémité de départ d'enroulement (SA) et une extrémité de fin d'enroulement (E1) dans des portions voisines de l'extrémité de bande de roulement (Ar1, Ar2) à l'exception des extrémités de bande de roulement (P1, P2), et une portion de centre de bande de roulement, les portions voisines des extrémités de bande de roulement (Ar1, ar2) étant dans une plage depuis une valeur égale ou supérieure à 5 % jusqu'à une valeur égale ou inférieure à 25 % de la largeur maximum (W) du caoutchouc de bande de roulement (10) depuis les extrémités de bande de roulement (P1, P2) vers le côté central, et
- dans lequel l'étape de formation de caoutchouc de bande de roulement comprend un stade consistant à enrouler le ruban de caoutchouc (20) depuis une extrémité de départ d'enroulement (S1) vers un premier côté dans la direction en largeur du pneumatique (WD) dans une section transversale méridienne du pneumatique, à replier ensuite le ruban de caoutchouc (20) vers l'autre côté dans la direction en largeur du pneumatique (WD) à l'extrémité de bande de roulement sur le premier côté, à enrouler le ruban de caoutchouc (20) vers l'extrémité de bande de roulement sur l'autre côté au-delà de l'extrémité de départ d'enroulement (SI), à replier ensuite le ruban de caoutchouc (20) vers le premier côté dans la direction en largeur du pneumatique (WD) à l'extrémité de bande de roulement sur l'autre côté, et à enrouler le ruban de caoutchouc (20) vers l'extrémité de fin d'enroulement (E1).

6. Procédé de fabrication selon la revendication 5,
dans lequel l'extrémité de fin d'enroulement (E1) est agencée à la position de formation de la gorge principale (15) s'étendant dans la direction périphérique du pneumatique.

7. Procédé de fabrication selon la revendication 5 ou 6,
dans lequel la portion à structure en trois couches est formée en repliant le ruban de caoutchouc (20) qui est enroulé vers le premier côté dans la direction en largeur du pneumatique (WD), à la position qui est plus rapprochée du côté central que les extrémités de bande de roulement (P1, P2), en enroulant le ruban de caoutchouc (20) vers l'autre côté dans la direction en largeur du pneumatique (WD), et ensuite en repliant le ruban de caoutchouc (20) à nouveau de manière à l'enrouler vers le premier côté dans la direction en largeur du pneumatique (WD).

8. Procédé de fabrication selon l'une quelconque des revendications 5 à 7,
dans lequel une première couche est formée en déplaçant la position d'enroulement du ruban de caoutchouc (20) vers l'extrémité de bande de roulement sur l'autre côté dans la direction en largeur du pneumatique (WD) depuis l'extrémité de départ d'enroulement (S1) de la portion voisine de l'extrémité de bande de roulement sur le premier côté dans la direction en largeur du pneumatique (WD), parmi les portions voisines de la paire de portions voisines des extrémités de la bande de roulement, une seconde couche est ensuite formée en repliant la position d'enroulement du ruban de caoutchouc (20) vers le premier côté dans la direction en largeur du pneumatique (WD) à l'extrémité de bande de roulement sur l'autre côté dans la direction en largeur du pneumatique (WD), et en déplaçant vers l'extrémité de bande de roulement sur le premier côté au-delà de l'extrémité de départ d'enroulement (SI), et une troisième couche est ensuite formée en repliant la position d'enroulement du ruban de caoutchouc (20) vers l'autre côté dans la direction en largeur du pneumatique à l'extrémité de bande de roulement sur le premier côté et en définissant la portion voisine de l'extrémité de bande de roulement sur l'autre côté dans la direction en largeur du pneumatique (WD) comme extrémité de fin d'enroulement (E1).
